# EUROPÄISCHE PATENTSCHRIFT

(11) **EP 1 216 885 B1**
(45) Veröffentlichungstag und Bekanntmachung des Hinweises auf die Patenterteilung: **22.02.2006**
(21) Anmeldenummer: 01129719.9
(22) Anmeldetag: 13.12.2001
(51) Int. Cl.: B60R 21/06, B60R 5/04

(54) **Vorrichtung zur Aufnahme eines Laderaumabdeckrollos oder Sicherheitsnetzes**
Device for holding a luggage compartment cover or security net
Dispositif adapté à recevoir un volet cache-bagages ou filet de sécurité

(30) Priorität: 19.12.2000 DE 10063465
(43) Veröffentlichungstag der Anmeldung: 26.06.2002
(73) Patentinhaber: BOS GmbH & Co. KG, 73760 Ostfildern (DE)
(72) Erfinder: Sitzler, Wolfgang, 42111 Wuppertal (DE); Crisp, Terence Sam, 3140 Keerbergen (BE)
(74) Vertreter: Patentanwälte Ruff, Wilhelm, Beier, Dauster & Partner

(56) Entgegenhaltungen:
- EP-A- 1 180 453
- DE-A- 19 847 787
- DE-C- 10 033 381

## Beschreibung

Die Erfindung betrifft eine Vorrichtung zur Aufnahme einer flexiblen, insbesondere von einer Wickelwelle entgegen der Wirkung eines Federmotors abziehbaren Werkstoffbahn gemäß dem Oberbegriff des Anspruches 1.

Eine derartige Vorrichtung ist beispielsweise aus der DE 195 26 666 A1 bekannt. Hier sind jeweils im Endbereich der axial langgestreckten Vorrichtung zwei Betätigungsknöpfe ausgebildet, die der Benutzer zur Demontage der Vorrichtung von der Fahrzeugwand betätigen muß. Eine derartige Anordnung wird hinsichtlich ihrer Handhabbarkeit bei der Demontage als nachteilig angesehen.

Aus der DE-GM 75 00 822.9 ist bereits eine Vorrichtung bekannt, bei der eine Befestigungsleiste, an der beispielsweise eine Laderaumabdeckung gehalten ist, lösbar an der Rückwand der Fahrzeugrücklehne befestigbar ist. Hier ist mittig zentral ein Zugseil angedeutet, welches durch Zug, offensichtlich in Fahrzeuglängsrichtung nach hinten eine Verlagerung von Verriegelungselementen in Lateralrichtung bewirkt.

Der Erfindung liegt die Aufgabe zu Grunde, eine Vorrichtung gemäß dem Oberbegriff des Anspruches 1 derart weiterzubilden, daß sie eine einfachere und komfortablere Handhabung ermöglicht.

Die Erfindung löst diese Aufgabe mit den Kennzeichnenden Merkmalen des Anspruches 1.

Das Prinzip der Erfindung besteht somit im wesentlichen darin, eine Mehrzahl von Befestigungselementen, beispielsweise zwei Riegeln, ein gemeinsames, zentrales, insbesondere mittig an der Vorrichtung angeordnetes Betätigungselement zuzuordnen. Dieses Betätigungselement weist ein Griffteil auf, welches von einem Benutzer auf einfache Weise betätigbar ist, um beispielsweise die Riegel zu verlagern. Das Griffteil ist dabei einerseits im Bereich des Schwerpunktes der Vorrichtung angeordnet, so daß sich in der Regel eine mittig zentrale Anordnung ergibt. Darüber hinaus ist das Griffteil jedoch nahe an dem Gehäuse angeordnet. Dies bietet die Möglichkeit einer Konstruktion derart, daß ein Benutzer durch Ergreifen der Vorrichtung mittig zentral, also im Bereich des Schwerpunktes, das Griffteil erfassen und betätigen kann, die Befestigungselemente somit in ihre Lösestellung verlagern kann, und anschließend, ohne seinen Griff zu ändern oder eine Bewegung seiner Hand relativ zu der Vorrichtung vorzunehmen, die Vorrichtung demontieren, d.h. in von Hand getragener Weise von der Fahrzeugwand weg bewegen und z.B. aus dem Laderaum entnehmen kann.

Beispielsweise kann ein Benutzer das Gehäuse der Vorrichtung derart ergreifen, daß sein Handballen die Vorrichtung mittig zentral untergreift und ein klappenartiges oder schwenkflügelartiges Betätigungselement mit einem Griffteil dicht an der Unterseite des Gehäuses angeordnet ist. Der Benutzer kann dann beispielsweise mit einem Finger das Griffteil betätigen und das Gehäuse unmittelbar, ohne seinen relativen Griffsitz, also die Position seiner Hand relativ zum Gehäuse zu ändern, demontieren.

Auf diese Weise ist die Demontage der Vorrichtung von einer Fahrzeugwand deutlich erleichtert.

Beim Stand der Technik DE 195 26 666 A1 ist es notwendig, zunächst den einen Betätigungsknopf zum Verlagern des Einriegelelementes in seine Lösestellung zu betätigen und so dann sukzessive den anderen Betätigungsknopf zur Verlagerung des zweiten Riegelelementes in einer Lösestellung zu betätigen. Anschließend kann die Vorrichtung von der Fahrzeugwand demontiert werden.

Eine Demontage ist hier somit ausschließlich mit beiden Händen möglich.

Beim Stand der Technik gemäß DE-GM 75 00 822.9 ist ein Zugseil vorgesehen, welches eine derartig dimensionierte Handschlaufe aufweist, daß ein Benutzer mit einer Hand zunächst an dem Zugseil ziehen muß. Gleichzeitig muß er vermutlich mit seiner zweiten Hand die Befestigungsleiste stützen. Eine einhändige Demontage ist auch hier nicht möglich.

Die Erfindung ermöglicht dem gegenüber neben einer einhändigen Montage auch eine einhändige Demontage, was insbesondere bei häufigem Demontieren der erfindungsgemäßen Vorrichtung vorteilhaft ist.

Insbesondere bei einer Ausbildung der erfindungsgemäßen Vorrichtung derart, daß das Gehäuse der Vorrichtung zur Montage und Demontage eine geringe Schwenkbewegung relativ zu der Fahrzeugwand ausführt, bieten sich besondere Vorteile hinsichtlich der Konstruktion der erfindungsgemäßen Vorrichtung und deren Handhabung. Darauf wird später detailliert eingegangen.

Das Griffteil wird derart nahe an dem Gehäuse angeordnet, daß ein Benutzer dieses insbesondere mit einem seiner Finger betätigen kann, ohne seinen räumlichen Handsitz gegenüber dem Gehäuse verändern zu müssen, wenn er die Vorrichtung in handgetragener Weise von der Fahrzeugwand weg bewegen möchte.

Gemäß einer vorteilhaften Ausgestaltung der Erfindung ist das Griffteil im Bereich der Unterseite des Gehäuses angeordnet. Dies ermöglicht eine besonders vorteilhafte Anordnung des Griffteils derart, daß ein Benutzer beim Untergreifen der Vorrichtung das Griffteil bequem erreichen kann. Dies begünstigt eine einfache Handhabung bei der Demontage bei der Vorrichtung.

Gemäß einer weiteren vorteilhaften Ausgestaltung der Erfindung ist das Griffteil schwenkbar an dem Gehäuse angeordnet. Dies ermöglicht eine besonders einfache Ausbildung des Griffteils, wobei es zusätzlich möglich ist, das Griffteil zur Verschwenkung des Riegels in dessen Löseposition von der Fahrzeugwand weg zu schwenken, also zum Benutzer hin zu schwenken. Dies ermöglicht eine besonders einfache Handhabung des Griffteils bei der Demontage der Vorrichtung.

Gemäß einer weiteren vorteilhaften Ausgestaltung der Erfindung ist das Griffteil mit einer schwenkbaren Welle bewegungsgekoppelt. Dies ermöglicht eine besonders einfache Ausbildung einer Bewegungskopplung zwischen dem Griffteil und gegebenenfalls mehreren, insbesondere zwei Riegeln. Auf diese Weise ist eine gemeinsame, gleichmäßige Bewegung der Riegel unter Gewährleistung größtmöglicher Sicherheit erreichbar.

Gemäß einer weiteren vorteilhaften Ausgestaltung der Erfindung ist die Welle mit Betätigungsansätzen von Riegeln bewegungsgekoppelt. Dies ermöglicht eine besonders einfache Ausgestaltung der Verbindung zwischen den Riegeln und der Welle.

Gemäß einer weiteren vorteilhaften Ausgestaltung der Erfindung ist an dem Gehäuse eine Angriffsfläche für einen Handballen eines Benutzers angeordnet. Dies ermöglicht eine besonders einfache Ausbildung des Gehäuses der Vorrichtung, um gleichzeitig dem Benutzer eine bequeme Ansatzfläche für seinen Handballen zu schaffen, auf den beim handgetragenen Tarnsport der Vorrichtung ein Großteil der Schwerkräfte der Vorrichtung ausgeübt wird.

Gemäß einer weiteren besonders vorteilhaften Ausgestaltung der Erfindung weist die Betätigungsfläche einen Abstand von der Angriffsfläche derart auf, daß die Betätigungsfläche bei an der Angriffsfläche anliegendem Handballen eines Benutzers mit den Fingern eines Benutzers betätigbar ist. Diese Ausgestaltung ermöglicht eine besonders einfache Betätigung des Griffteiles durch den Benutzer während dieser seinen Handballen an die Angriffsfläche des Gehäuses angelegt hat. So kann ein Benutzer durch ein einziges Anlegen seiner Hand an die Vorrichtung eine Demontage erreichen, ohne daß er die Position seiner Hand relativ zu der Vorrichtung ändern muß. Es ist letztendlich nur noch ein einziger Handgriff notwendig, um die Vorrichtung zu demontieren.

Weitere vorteilhafte Ausgestaltungen der Erfindung ergeben sich aus den nicht zitierten Unteransprüchen sowie an Hand der nun folgenden Beschreibung mehrerer in den Zeichnungen dargestellter Ausführungsbeispiele. Darin zeigen:
Fig. 1 in perspektivischer, schematischer Ansicht eine erfindungsgemäße Vorrichtung mit einem Sicherheitsnetz sowie die hintere Rücklehne eines Fahrzeugrückraums in Hinteransicht,
Fig. 2 in schematischer teilgeschnittener Ansicht eine erfindungsgemäße Vorrichtung mit Befestigungselementen mit gegenüber Fig. 1 eingefahrenem Sicherheitsnetz und einen entsprechenden Rücklehnenbereich mit den Gegenelementen, etwa entlang der SchnittlinieII-II in Fig. 1,
Fig. 3 ein zweites Ausführungsbeispiel einer erfindungsgemäßen Vorrichtung in einer Darstellung gemäß Fig. 2, wobei Befestigungselemente und Gegenelemente bereits teilweise miteinander in Eingriff gebracht sind,
Fig. 4 in perspektivischer, schematischer Unteransicht die erfindungsgemäße Vorrichtung gemäß Fig. 2, wobei die Befestigungselemente weggelassen worden sind, und
Fig. 5 in schematischer Ansicht ein drittes Ausführungsbeispiel der erfindungsgemäßen Vorrichtung mit einer an der Unterseite der Vorrichtung anliegenden Hand eines Benutzers.

Gleiche bzw. vergleichbare Elemente oder Teile werden in der nun folgenden Figurenbeschreibung der Übersichtlichkeit halber mit gleichen Bezugszeichen bezeichnet.

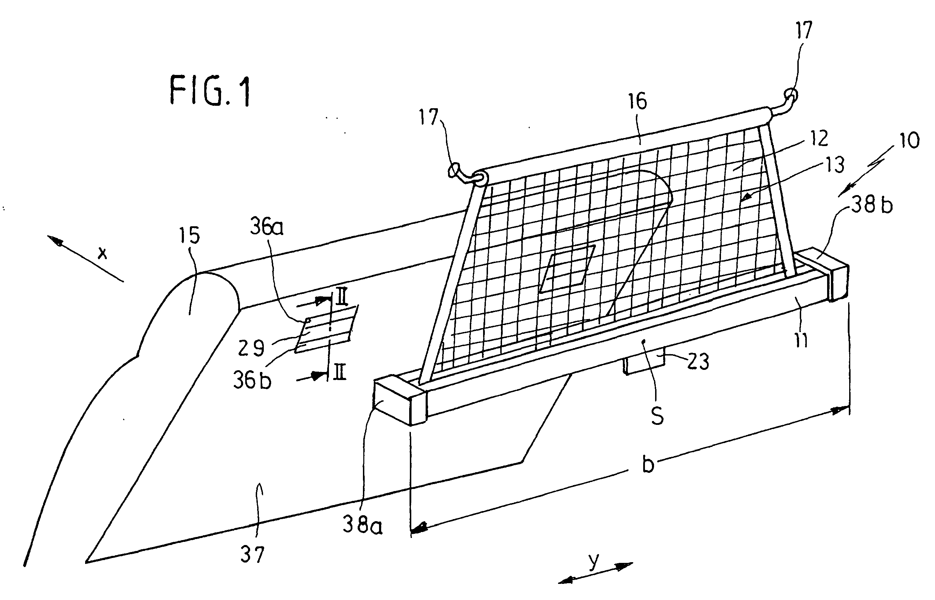

Die in den Figuren in ihrer Gesamtheit mit 10 bezeichnete Vorrichtung weist ein Gehäuse 11 auf und dient der Aufnahme und insbesondere auch Halterung einer Werkstoffbahn 12. Bei der Werkstoffbahn 12 kann es sich, wie gemäß Fig. 1 dargestellt, um ein Sicherheitsnetz 13 handeln, welches insbesondere in im wesentlichen vertikaler Richtung bei montierter Vorrichtung 10 aus dem kassettenartig ausgebildeten Gehäuse 11 ausziehbar und mittels einer Haltestange 16 und beispielsweise endseitig an der Haltestange 16 vorgesehener Halteenden 17 in fahrzeugseitige, insbesondere im Bereich des Dachhimmels oder der oberen Seitenwände vorgesehene Aufnahmetaschen formschlüssig eingehängt werden kann.

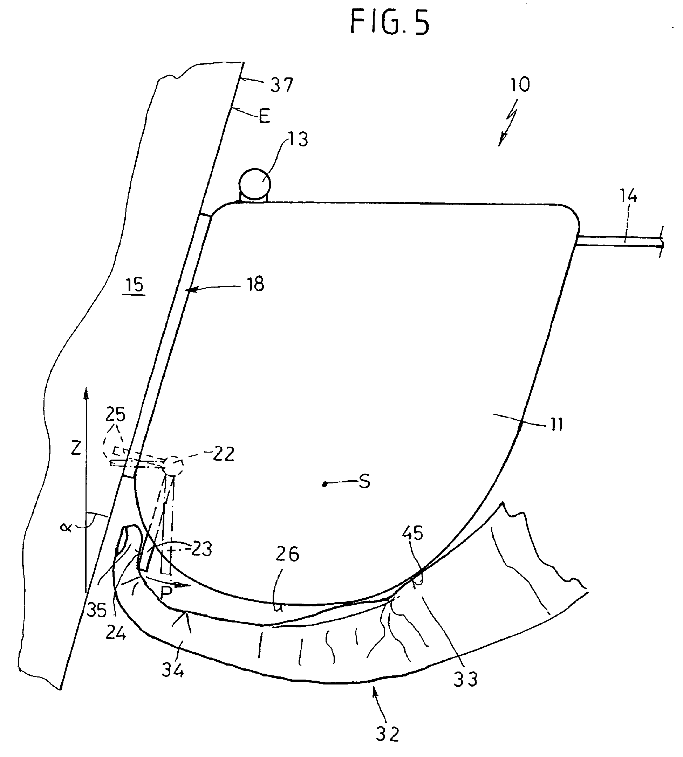

Fig. 5 deutet alternativ an, daß die Vorrichtung 10 auch eine Laderaumabdeckung 14 aufnehmen kann, die in ausgezogenem Zustand im wesentlichen horizontal im Fahrzeug angeordnet ist und beispielsweise im Bereich der Hecktür an den Fahrzeugwänden in ihrer ausgezogenen Position befestigt werden kann. Außerdem ist aus Fig. 5 bereits ersichtlich, daß die Vorrichtung 10 sowohl ein Sicherheitsnetz 13 wie auch gleichzeitig eine Laderaumabdeckung 14 aufnehmen kann.

Die erfindungsgemäße Vorrichtung 10 ist lösbar an einer Rücklehne 15 (Fig.1) befestigbar, die zwischen einem Fahrgastrückraum und einem Laderaum angeordnet ist. Selbstverständlich ist es bei Bedarf auch möglich, die Vorrichtung 10 im Bereich der Fahrzeugseitenwände lösbar zu befestigen.

Bei Betrachtung der Fig. 1 wird deutlich, daß die axiale Länge b der Vorrichtung 10 bei Betrachtung in Richtung y also, im wesentlichen senkrecht zur Fahrtrichtung x, maximal der Innenraumbreite des Kraftfahrzeugs entsprechen kann.

Eine Demontage einer erfindungsgemäßen Vorrichtung 10 kommt beispielsweise in Betracht, um einen störkantenfreien Laderaum zu gewährleisten, insbesondere auch bei in Fahrtrichtung x nach vorn umgelegter Rücklehne 15, wenn die Ladefläche, die auf diese Weise teilweise von der Rückseite 37 der Rücklehne 15 gebildet wird, im wesentlichen durchgehend und vorsprungfrei ausgebildet sein soll.

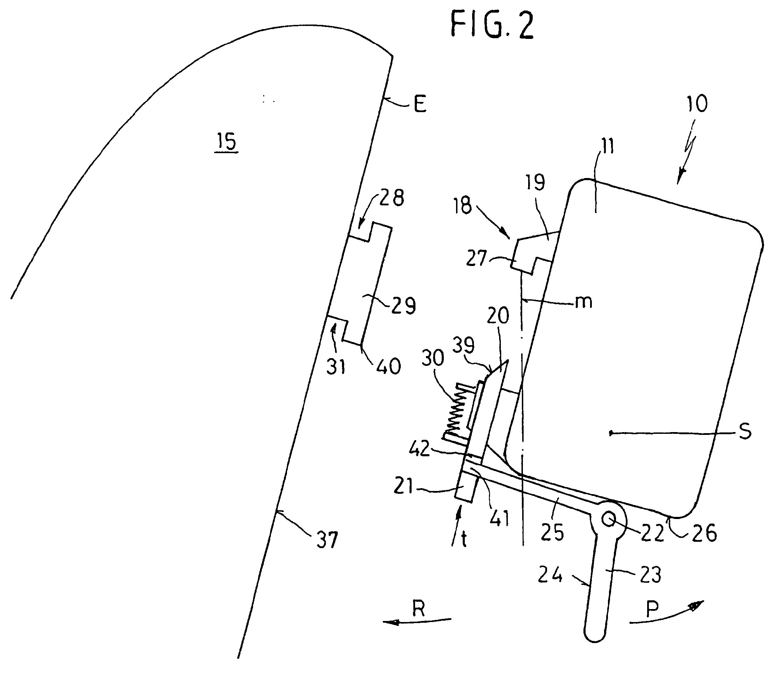

Fig. 2 soll zunächst nur schematisch die Anordnung von Befestigungselementen 18 und Gegenelementen 29 erläutern: An dem Gehäuse 11 der Vorrichtung 10 ist im Bereich des in Fig. 2 linken oberen Eckbereichs, vorzugsweise im Bereich der beiden axialen Endbereiche 38a, 38b der Vorrichtung 10, die z.B. auch als Endkappen ausgebildet sein können, jeweils ein klauenartiger Vorsprung 19 angeordnet. Dieser dient dazu, in eine entsprechende, im wesentlichen formschlüssige Nut 28 eingehängt zu werden, welche von einem im wesentlichen T-förmigen Flansch 29, der an der Rücklehne 15 angeordnet ist, bereitgestellt wird.

Am Gehäuse 11 ist dem klauenartigen Vorsprung 19 gegenüberliegend ein entlang der Richtung t verschiebbar gelagerter Riegel 20 angeordnet. Dieser weist eine geneigte Führungsfläche 39 auf, die mit einem entsprechenden Eckbereich 40 des T-fömigen Flansches zusammenwirkt.

Der Riegel 20 ist von einem Federelement 30 in seine in Fig. 2 dargestellte ausgefahrene Position hin belastet, die die Sperrstellung des Riegels 20 darstellt.

Zur Montage der Vorrichtung 10 an der Rücklehne 15 des Fahrzeugs wird die Vorrichtung 10 mit ihren beiden klauenartigen Vorsprüngen 19 zunächst in die entsprechenden Nuten 28 des T-förmigen Flansches 29 eingehängt. Anschließend kann - in Abhängigkeit von der Wahl des Schwerpunktes S, worauf später noch detailliert eingegangen wird - die gesamte Vorrichtung 10 um eine Schwenkachse herum, die im Bereich der Nut 28 bzw. des in die Nut 28 eingehängten freien Endes 27 des klauenförmigen Vorsprungs 19 liegt, im wesentlichen entlang dem Pfeil R verschenkt werden, bis die Führungsfläche 39 des Riegels 20 auf den Eckbereichs 40 des T-förmigen Flansches 29 trifft. Bei fortlaufender Schwenkbewegung entlang der Richtung R wird der Riegel 20 entgegen der Richtung t bezüglich Fig. 2 im wesentlichen nach unten entgegen dem Druck der Feder 30 verschoben, und schnappt schließlich in die untere Nut 31 des T-förmigen Flansches 29 ein. In dieser Lage ist die Vorrichtung 10 dauerhaft sicher an der Rücklehne 15 arretiert. Eine selbsttätige Lösung der Vorrichtung 10 ist in der Montageposition somit sicher ausgeschlossen.

Zur Demontage der Vorrichtung 10 von der Rückwand 15 des Kfz wird von einem Benutzer ein Griffteil 23, welches flügelartig, schwenkbar um eine Schwenkachse 22 herum an dem Gehäuse 11 befestigt ist, im wesentlichen entlang dem Pfeil P verschwenkt. Ein drehfest mit dem Griffteil 23 oder der schwenkbaren Welle 22 verbundenes Kopplungsmittel 25 greift mit seinem freien Ende 41 in eine Aufnahme 42 ein, die an einem Betätigungsansatz 21 für den Riegel 20 angeordnet ist.

Durch Verschwenken des Griffteils 23 entgegen dem Uhrzeigersinn entlang dem Pfeil P wird der Riegel 20 entgegen der Federkraft in seine Lösestellung versetzt, so daß die Vorrichtung 10 entgegengesetzt dem Pfeil R verschwenkt werden kann und mit ihren klauenartigen Vorsprüngen 19 aus den entsprechenden Nuten 28 auf einfache Weise entnommen werden kann.

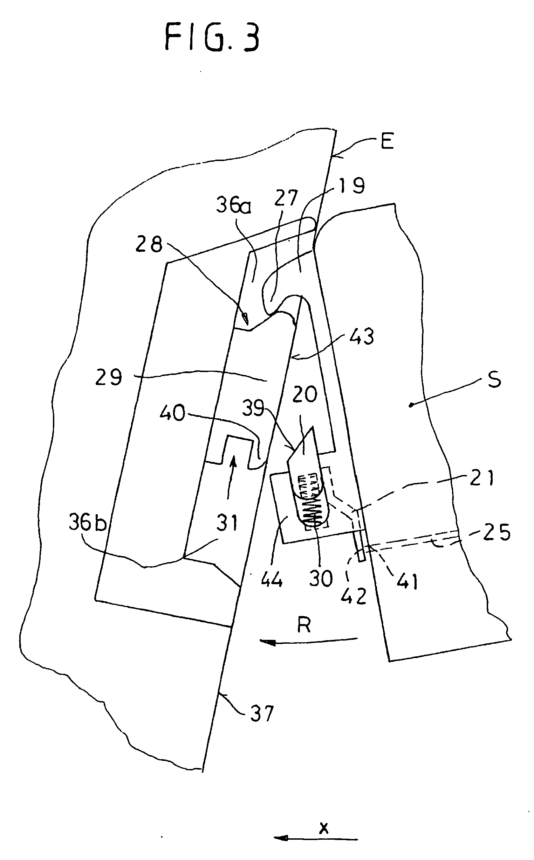

Der Schwerpunkt S der Vorrichtung, der in den Figuren nur schematisch angedeutet ist, kann derart gewählt werden, daß er sich, wie in Fig. 2 dargestellt, auf der der Fahrzeuglehne abgewandten Seite einer Geraden m befindet, die durch den von dem klauenartigen Vorsprung 19 und der Nut 28 gebildeten Drehlagerbereich hindurch zum Erdmittelpunkt verläuft, einer Gerade also, die die Richtung der Schwerkraft darstellt. Bei dieser Wahl des Schwerpunktes S, die in den Fig. 2 und 3 angedeutet ist, findet nach dem Einhängen der klauenartigen Vorsprünge 19 in die entsprechenden Nuten 28 nach dem Loslassen der Vorrichtung 10 eine automatische Verschwenkung der Vorrichtung 10 in ihre Verriegelungslage statt. Auf diese Weise kann mit größtmöglicher Sicherheit dafür gesorgt werden, daß eine ordnungsgemäße Montageposition erreicht wird.

Wird der Schwerpunkt S der Vorrichtung durch eine andere Konstruktion der Vorrichtung 10 derart positioniert, daß er auf der der Gerade m gegenüberliegenden Seite, also der der Fahrzeuglehne 15 zugewandten Seite der Geraden m liegt, so kann die Demontage der Vorrichtung 10 dadurch erleichtert werden, daß nach Betätigung des Betätigungselementes 23 durch einen Benutzer die Vorrichtung 10 automatisch in eine entriegelte Position entgegen dem Pfeil R verschwenkt, aus der die Vorrichtung 10 sehr leicht entnehmbar ist.

Wie sich insbesondere aus der Fig. 5 ergibt, ist die Rücklehne 15 in der Regel relativ zu einer vertikalen Achse z, welche im wesentlichen normal zu dem Boden steht, auf dem sich das Fahrzeug befindet, unter einem Winkel α geneigt angeordnet. Die Rücklehne 15, bzw. deren Rückseite 37 ist dabei im wesentlichen entlang einer Ebene E angeordnet.

Beim Ausführungsbeispiel gemäß Fig. 3 sind die Gegenelemente 28, 29 derart angeordnet, daß der T-förmige Flansch 29 mit seiner Außenseite 43 bündig entlang der Ebene E angeordnet ist, so daß lediglich taschenartige Aufnahmen 36a, 36b von der Ebene E in Fahrtrichtung x zurückspringen. Auf diese Weise kann die Rücklehne 15 mit ihrer Rückseite 37 vollständig vorsprungfrei, und somit störkantenfrei, ausgebildet werden.

Das Vorsehen eines Betätigungsansatzes 21, der mit dem Riegel 20 gekoppelt ist (Fig. 3) ermöglicht dabei eine Unterbringung des Riegels 20 sowie der entsprechenden am Gehäuse 10 befestigten Riegetaufnahme 44, in der Aufnahme 36b, wobei die Betätigung des Riegels 20 mittelbar über den Betätigungsansatz 21 jedoch auf bequeme Weise vom Laderaum her erfolgen kann. Die taschenförmigen Aufnahmen 36b können somit bei geschickter Konstruktion des Betätigungsansatzes 21 relativ klein ausgebildet werden.

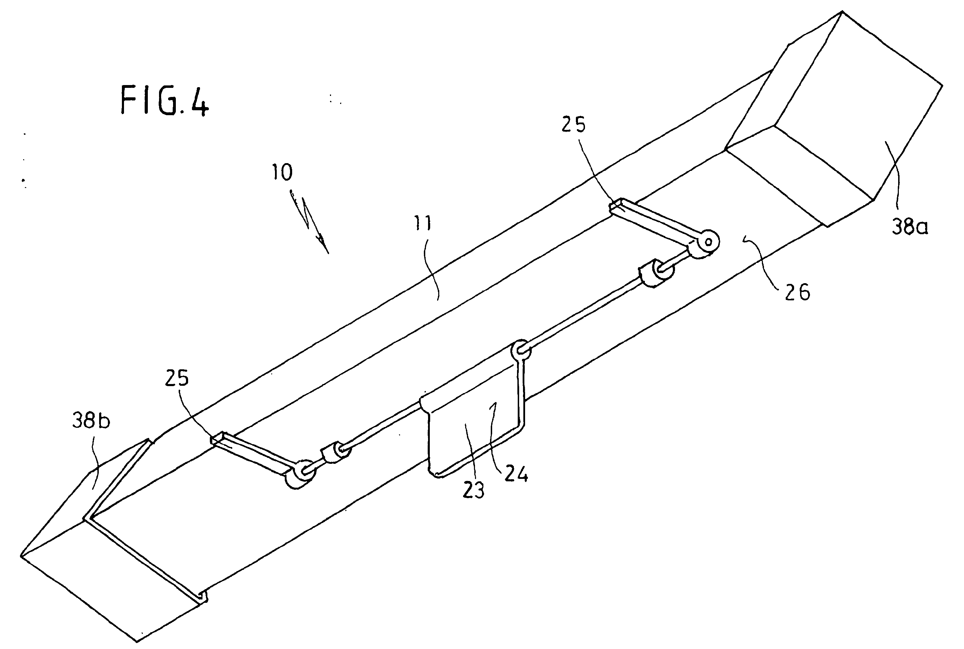

Das Griffteil 23 ist in den Figuren 1, 2 und 4 übertrieben groß und nur schematisch dargestellt. Eine ebenfalls schematische, einer tatsächlichen Ausführungsform jedoch naher kommende Ausführung zeigt Fig. 5:

Hier ist eine Vorrichtung 10 mit einem Gehäuse 11 dargestellt, dessen Unterseite 26 eine bezüglich den eingangs beschriebenen Ausführungsbeispielen vorteilhafte Struktur aufweist: An der Unterseite 26 des Gehäuses 11 ist eine Angriffsfläche 45 angeordnet, an der ein Handballen 33 einer schematisch angedeuteten Hand 32 eines Benutzers zum Anliegen kommt.

Das Griffteil 23 ist in der zuvor beschriebenen Weise schwenkbar an dem Gehäuse 11 angeordnet. Die Dimensionen sind hier jedoch so gewählt, daß eine Betätigungsfläche 24 des Griffteils 23 von dem Benutzer bequem mit seinen Fingern 34, insbesondere dem freien, äußeren Fingerglied 35, gegebenenfalls auch mehreren Fingergliedern 35, betätigt werden kann, während der Handballen 33 der Hand 32 dieses Benutzers an der Angriffsfläche 45 anliegt. Angriffsfläche 45 und Griffteil 23 sind dabei im Bereich des Schwerpunktes S angeordnet, so daß ein Benutzer einhändig die Vorrichtung 10 ergreifen kann, das Griffteil 23 und die Schwenkachse 22 herum entlang dem Pfeil P verschwenken kann und die Vorrichtung 10 von der Fahrzeugrücklehne 15 entnehmen kann, ohne seine Hand von dem Gehäuse 11 der Vorrichtung 10 zu lösen oder die räumliche Lage seiner Hand 32 zu dem Gehäuse 11 der Vorrichtung 10 zu ändern. Das Griffteil 23 wird dabei von der in gestrichelten Linien dargestellten Sperrposition gemäß Fig. 5 in seine in Fig. 5 gestrichpunktet dargestellte Löseposition verschwenkt.

Bei den in den Zeichnungen dargestellten Ausführungsbeispielen ist das Griffteil 23 das Betätigungselement. Alternativ kann selbstverständlich auch vorgesehen sein, einem nicht dargestellten Betätigungselement lediglich ein Griffteil 23 zur Betätigung zu zuordnen.

## Patentansprüche

1. Vorrichtung (10) zur Aufnahme einer flexiblen, insbesondere von einer Wickelwelle entgegen der Wirkung eines Federmotors abziehbaren Werkstoffbahn (12) einer Kfz-Sicherheitseinrichtung, wie Sicherheitsnetz (13), oder Laderaumabdeckung (14) mit einem kassettenartig ausgebildeten Gehäuse (11), **dadurch gekennzeichnet, daß** an dem Gehäuse (11) Befestigungselemente (18, 19, 27) zur Montage und Demontage des Gehäuses (11) an einer Fahrzeugwand (15) angeordnet sind, die gemeinsam von einem zentral, im Bereich des Schwerpunktes (S) des Gehäuses (11) angeordneten Griffteil (23) eines Betätigungselementes von ihrer Sperrposition in ihre Lösestellung verlagerbar sind, wobei das Griffteil (23) eine Betätigungsfläche (24) zur Betätigung durch einen Benutzer aufweist, die nahe an dem Gehäuse (11) angeordnet ist.

2. Vorrichtung nach Anspruch 1, **dadurch gekennzeichnet, daß** das Griffteil (23) im Bereich der Unterseite (26) des Gehäuses (11) angeordnet ist.

3. Vorrichtung nach Anspruch 1 oder 2, **dadurch gekennzeichnet, daß** das Griffteil (23) schwenkbar an dem Gehäuse (11) angeordnet ist.

4. Vorrichtung nach Anspruch 3, **dadurch gekennzeichnet, daß** das Griffteil (23) zu dessen Verlagerung in die Lösestellung von der Fahrzeugwand (15) wegschwenkbar ist.

5. Vorrichtung nach einem der vorangegangenen Ansprüche, **dadurch gekennzeichnet, daß** das Griffteil (23) als Schwenkflügel ausgebildet ist.

6. Vorrichtung nach einem der Ansprüche 1 bis 5, **dadurch gekennzeichnet, daß** das Griffteil (23) mit einer schwenkbaren Welle (22) bewegungsgekoppelt ist.

7. Vorrichtung nach Anspruch 6, **dadurch gekennzeichnet, daß** die Welle (22) mit Betätigungsansätzen (21) von Riegeln (20) bewegungsgekoppelt ist.

8. Vorrichtung nach einem der vorangegangenen Ansprüche, **dadurch gekennzeichnet, daß** an dem Gehäuse (11) eine Angriffsfläche (45) für einen Handballen (33) eines Benutzers angeordnet ist.

9. Vorrichtung nach Anspruch 8, **dadurch gekennzeichnet, daß** die Betätigungsfläche (24) einen Abstand von der Angriffsfläche (45) derart aufweist, daß die Betätigungsfläche (24) bei an der Angriffsfläche (45) anliegendem Handballen (33) eines Benutzers mit den Fingern (34, 35) des Benutzers betätigbar ist.

## Claims

1. A device (10) for holding a flexible material web (12), especially a material web drawable from a winding roller against the action of a spring drive, of a vehicle security device, such as a security net (13) or loading space cover (14), having a housing (11) of cartridge-type construction, **characterised in that** fixing elements (18, 19, 27) for mounting and demounting of the housing (11) on a vehicle wall (15) are arranged on the housing (11), and are jointly displaceable from their locking position into their release position by an operating element grip part (23) arranged centrally in the region of the centre of gravity (S) of the housing (11), the grip part (23) having an operating face (24) arranged close to the housing (11) for operation by a user.

2. A device according to claim 1, **characterised in that** the grip part (23) is arranged in the region of the underside (26) of the housing (11).

3. A device according to claim 1 or 2, **characterised in that** the grip part (23) is pivotally arranged on the housing (11).

4. A device according to claim 3, **characterised in that** for displacement into its release position the grip part (23) is pivotable away from the vehicle wall (15).

5. A device according to any one of the preceding claims, **characterised in that** the grip part (23) is in the form of swing-type flange.

6. A device according to any one of the claims 1 to 5, **characterised in that** the grip part (23) is coupled in respect of movement to a pivotable shaft (22).

7. A device according to claim 6, **characterised in that** the shaft (22) is coupled in respect of movement to operating lugs (21) of locking bolts (20).

8. A device according to any one of the preceding claims, **characterised in that** an application face (45) for the heel of the hand (33) of a user is arranged on the housing (11).

9. A device according to claim 8, **characterised in that** the operating face (24) is spaced from the application face (45) such that when the heel of the hand (33) of a user is located on the application face (45) the operating face (24) is operable with the fingers (34, 35) of the user.

## Revendications

1. Dispositif (10) adapté à recevoir un pan de matériau (12) flexible d'un dispositif de sécurité d'un véhicule automobile, ledit pan pouvant être notamment déroulé d'un arbre d'enroulement dans le sens contraire de l'effet d'un moteur à ressort, tel qu'un filet de sécurité (13), ou un cache-bagages (14), avec un boîtier (11) en forme de cassette, **caractérisé en ce que** des éléments de fixation (18, 19, 27) sont fixés sur le boîtier (11), lesdits éléments étant destinés au montage et démontage dudit boîtier (11) sur une paroi de véhicule (15) et étant déplaçables ensemble depuis leur position de blocage vers leur position déclenchée à partir d'une poignée centrale (23) d'un élément de commande, disposée au niveau du centre de gravité (S) du boîtier (11), ladite poignée (23) comportant une surface de commande (24) destinée à la commande par un utilisateur, ladite surface se trouvant à proximité du boîtier (11).

2. Dispositif selon la revendication 1, **caractérisé en ce que** la poignée (23) est disposée au niveau du côté inférieur (26) du boîtier (11).

3. Dispositif selon la revendication 1 ou 2, **caractérisé en ce que** la poignée (23) est disposée de manière articulée sur le boîtier (11).

4. Dispositif selon la revendication 3, **caractérisé en ce que** la poignée (23) peut être escamotée de la paroi du véhicule (15) en vue de son déplacement dans la position déclenchée.

5. Dispositif selon l'une quelconque des revendications précédentes, **caractérisé en ce que** la poignée (23) est réalisée en forme de patte orientable.

6. Dispositif selon l'une quelconque des revendications 1 à 5, **caractérisé en ce que** la poignée (23) est accouplée par complémentarité de mouvement à un arbre articulé (22).

7. Dispositif selon la revendication 6, **caractérisé en ce que** l'arbre (22) est accouplé par complémentarité de mouvement à des saillies de commande (21) de verrous (20).

8. Dispositif selon l'une quelconque des revendications précédentes, **caractérisé en ce que** sur le boîtier (11) est disposée une surface d'attaque (45) destinée à une protubérance (33) de la main d'un utilisateur.

9. Dispositif selon la revendication 8, **caractérisé en ce que** la surface de commande (24) est distancée de la surface d'attaque (45) de telle sorte que ladite surface de commande (24) peut être commandée par les doigts (34, 35) d'un utilisateur, lorsque la protubérance (33) de la main épouse ladite surface d'attaque (45).
